(19) Europäisches Patentamt
European Patent Office
Office européen des brevets

(11) **EP 4 372 495 A1**

(12) **EUROPEAN PATENT APPLICATION**

(43) Date of publication:
**22.05.2024 Bulletin 2024/21**

(21) Application number: **23208963.1**

(22) Date of filing: **10.11.2023**

(51) International Patent Classification (IPC):
**G05B 19/042** (2006.01)

(52) Cooperative Patent Classification (CPC):
**G05B 19/0425**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **11.11.2022 US 202263424678 P**

(71) Applicant: **ATS Corporation
Cambridge ON N3H 4R7 (CA)**

(72) Inventors:
• **SOOD, Johannes
  Cambridge, Ontario N3H 4R7 (CA)**
• **JANITZA, Dennis
  Cambridge, Ontario N3H 4R7 (CA)**
• **BAUMEISTER, Joachim
  Cambridge, Ontario N3H 4R7 (CA)**

(74) Representative: **Fidal Innovation
4-6 avenue d'Alsace
92400 Courbevoie (FR)**

(54) **SYSTEMS, METHODS AND DEVICES FOR DETECTING ERRORS IN PROGRAMMABLE LOGIC CONTROLLERS**

(57)    Provided are systems, methods and devices for automation devices. The method includes providing an automation device for controlling at least one piece of automation equipment; receiving, at an input of the automation device, input data; storing, at an input process image, the input data; executing, at a processor of the automation device, an automation program to generate output data based on the input data; storing, at an output process image of the automation device, the output data; and storing, in a buffer, the input process image and the output process image.

EP 4 372 495 A1

## Description

### FIELD

The described embodiments relate generally to management and maintenance of automation devices such as programmable logic controllers, and specifically to data collection for maintenance, including fault analysis of automation devices such as programmable logic controllers.

### INTRODUCTION

Modern manufacturing and automation systems, including industrial control systems, are complex systems. For example, these systems are widely used in areas like auto manufacturing, mining, power grids, etc.

The complexity of these systems has increased over time, at least in part because these systems and processes are required to be fast, accurate and repeatable in order to provide appropriate product quality in short time frames. These automation systems and processes also seek to provide high machine efficiency with low downtime for maintenance, troubleshooting and the like.

Conventional manufacturing and automation systems, methods and devices include error code collection or fault code collection. That is, when an error condition is detected and the automation device enters an error or fault state, relevant error or fault events that are detected based on sensor data can be stored for further operator review. For example, in a manufacturing line situation, an error may be automatically generated and stored by the automation device when a distance between a part and the tool is too great.

With any particular locale with one or more pieces of automation equipment controlled by one or more automation devices, faults may occur during operation. These faults can have significant financial impacts, where a piece of automation equipment (or even worse, an entire assembly line) must be shut down so that an operator can diagnose and address the root cause.

One type of fault is a device fault, for example, faults with sensors, actuators, wiring, or faults of the automation controller itself. An automation operator may diagnose the issue by isolating a particular sensor, actuator, or the automation device itself and test the device individually until the fault is understood.

These faults may be detected by the automation device, which may automatically stop the piece of automation equipment to which it is attached, or an entire assembly line of automation equipment which operates in series. When this occurs, the automation device may generate a fault code and may enter a fault state until it is addressed by an operator. The fault code may indicate the source of the fault or may be a general error.

Faults may be detected by an automation device through the use of a timing check, or "watchdog" which may check that a particular operation of the automation device is completed within a particular time frame. A fault may be assumed where, for example, an actuator does not return to a retracted state. In such a situation, a timing check may generate an error and a fault code that may stop the associated automation equipment. The fault information provided by the timing check or watchdog may provide helpful information for an operator diagnosing the root cause.

Another method for fault detection may be an output check, where, as outputs occur, a status lamp may be used to indicate to an operator that a particular output is occurring. This may allow an operator to see what the last output state of the automation device was if the automation device enters a fault state and may aid the operator in diagnosing the root cause.

Another method for fault detection may be replication of the automation device. In particular scenarios, the automation device may be replicated and the replicated automation device repeats the same operations as the original automation device. If the replicated automation device output differs from the original automation device output for the same inputs, then it is assumed there is a fault. In the absence of a fault in a replication system, the output of the original automation device and the replicated automation device is the same. A fault indicating a disagreement between the original automation device and the replicated automation device may indicate a transient root cause, or an automation device issue to the operator.

Another method for fault detection may be expected value checks, where it is possible to detect faults based on a set of expected outputs of the automation device. This expected value check may indicate unexpected output in a fault so that the operator can identify the root cause.

Defects may result in a rejected project where product is not released for use. Defective parts may be diverted from a high-quality stream of parts to a reject handling stream of parts and may result in loss of components, loss of a processing opportunities, etc. as they must be fixed manually or disposed of.

Conventional manufacturing and automation systems may also be able to identify defects in products produced, noting and tracking stoppages/slowdowns in equipment being used, or the like. Also, part processing times may fluctuate. These fluctuations may be the result of individual components not travelling at expected speeds on conveyors or inlines. There may be a change in the facilities/power to the equipment where the voltage, current or pneumatic air pressure changes. Individual component speeds and efficiencies may vary. These and other conditions can cause an automated process to change the process speed and throughput of the equipment.

Faults in conventional systems however remain difficult to diagnose, and have major challenges for operators who are working to determine the cause or source of the defect (i.e. root cause analysis). This is because conventional systems lack fault detection and monitoring capabilities that provide appropriate information or instruction in order to identify its root cause and remedy the issue/problem that has caused the issue. Conventional systems are limited and do not provide appropriate detail or monitoring data to be used by an operator in order to evaluate the fault in question.

In addition, due to the lack of detailed information it is impossible for conventional systems to accurately predict when an issue will likely occur or when maintenance of a machine or part of a machine may be needed or most efficiently performed as a preventative measure.

In addition, due to the lack of detailed information it is impossible to test a program for an automation device in a simulation program on a workstation to improve its quality. This is because of the lack of detailed information which may be used to accurately simulate the environmental conditions of an automation device. This simulation is desirable because it can increase the level of safety associated with equipment and may save costly downtime during installation and commissioning of automated control applications since many scenarios can be tried and tested before the system is activated.

As such, there is a need for improved automation systems and methods for managing automation equipment in manufacturing and automation systems and providing improved data collection for analysis and to determine the cause or source of a defect.

## SUMMARY

Generally disclosed herein are systems, methods, and devices for automation devices.

In accordance with one aspect of the present disclosure, there is provided an automation device method, the method comprising: providing an automation device for controlling at least one piece of automation equipment; receiving, at an input of the automation device, input data; storing, at an input process image, the input data; executing, at a processor of the automation device, an automation program to generate output data based on the input data; storing, at an output process image of the automation device, the output data; and storing, in a buffer, the input process image and the output process image.

In one or more embodiments, the method may further comprise receiving, at the automation device, a fault event signal; and storing, at a storage device in communication with the automation device, the buffer.

In one or more embodiments, the storage device may be in network communication with the automation device.

In one or more embodiments, the storing, in the buffer, the input process image and the output process image may be initiated based on a clock signal of the automation device.

In one or more embodiments, the input process image may comprise at least one input register, and the output process image may comprise at least one output register.

In one or more embodiments, the buffer may comprise a ring buffer.

In one or more embodiments, the ring buffer may store N sets of output process image values, where $N = T_{duration} / T_{sample\ rate} * N_{monitor\ tags}$.

In one or more embodiments, the at least one input register may comprise at least one format type i selected from the group of a real number type, an integer type, a byte type, a Boolean type, an object oriented type, a hexadecimal type, a network transmission packet type, and an intermediate data format type; the at least one output register may comprise at least one format type j selected from the group of the real number type, the integer type, the byte type, the Boolean type, the object oriented type, the hexadecimal type, the network transmission packet type, and the intermediate data format type; and the buffer may have a size of at least N x M, where $M = N * \left( \sum_{i=0}^{n} M_i + \sum_{j=0}^{k} M_j \right)$.

In one or more embodiments, the automation device may comprise a programmable logic circuit, an embedded controller or a computer-based controller.

In one or more embodiments, the method may further comprise: determining, based upon a machine learning model and the buffer stored at the storage device, a predicted fault of the automation device.

In accordance with another aspect of the present disclosure, there is provided an automation device system, the system comprising: an automation device comprising: a memory comprising a buffer; an input process image comprising input data; an output process image comprising output data; a processor configured to: execute an automation program to generate the output data based on the input data; and store the input process image and the output process image in the buffer; and a network device; a storage device in communication with the network device of the automation device, the storage device configured to: receive the buffer from the automation device; and store the buffer.

In one or more embodiments, the processor of the automation device may further comprise an internal memory, the processor further configured to may further comprise: storing, in the buffer, the internal memory of the processor of the automation device.

In one or more embodiments, the internal memory of the processor may include one or more registers.

In one or more embodiments, the processor may be further configured to: receive a fault event signal; and transmit the buffer to the storage device using the network device.

In one or more embodiments, the processor may be further configured to store, in the buffer, the input process image and the output process image, and the storing is initiated based on a clock signal of the automation device.

In one or more embodiments, the input process image may comprise at least one input register, and the output process image may comprise at least one output register.

In one or more embodiments, the buffer may comprise a ring buffer.

In one or more embodiments, the ring buffer may store N sets of input process image values and N sets of output process image values, where $N = T_{duration} / T_{sample\ rate} * N_{monitor\ tags}$.

In one or more embodiments, the at least one input register may comprise at least one format type i selected from the group of a real number type, an integer type, a byte type, a Boolean type, an object oriented type, a hexadecimal type, a network transmission packet type, and an intermediate data format type; the at least one output register may comprise at least one format type j selected from the group of the real number type, the integer type, the byte type, the Boolean type, the object oriented type, the hexadecimal type, the network transmission packet type, and the intermediate data format type; and the buffer may have a size of at least N x M, where $M = N * \left( \sum_{i=0}^{n} M_i + \sum_{j=0}^{k} M_j \right)$.

In one or more embodiments, the automation device may comprise a programmable logic circuit, an embedded controller or a computer-based controller.

In one or more embodiments, the processor may be configured to: determine, based upon a machine learning model and the buffer, a predicted fault of the automation device.

In accordance with yet another aspect of the present disclosure, there is provided an automation device, comprising: a memory comprising a buffer; an input process image comprising input data; an output process image comprising output data; a processor configured to: execute an automation program to generate the output data based on the input data; and store the input process image and the output process image in the buffer; and a network device for transmitting the buffer to a storage device.

In one or more embodiments, the processor may be further configured to: receive a fault event signal; and transmit the buffer to the storage device using the network device.

In one or more embodiments, the processor may further comprise an internal memory, the processor may be further configured to: store, in the buffer, the internal memory of the processor of the automation device.

In one or more embodiments, the automation device may further comprise: a clock signal generator; wherein the processor may be further configured to store, in the buffer, the input process image and the output process image, and the storing is initiated based on the clock signal.

In one or more embodiments, the input process image may comprise at least one input register, and the output process image may comprise at least one output register.

In one or more embodiments, the buffer may comprise a ring buffer.

In one or more embodiments, the ring buffer may store N sets of input process image values and N sets of output process image values, where

$$N = T_{duration} / T_{sample\ rate} * N_{monitor\ tags}.$$

In one or more embodiments, the at least one input register may comprise at least one format type i selected from the group of a real number type, an integer type, a byte type, a Boolean type, an object oriented type, a hexadecimal type, a network transmission packet type, and an intermediate data format type; the at least one output register may comprise at least one format type j selected from the group of the real number type, the integer type, the byte type, the Boolean type, the object oriented type, the hexadecimal type, the network transmission packet type, and the intermediate data format type; and the buffer may have a size of at least N x M, where $M = N * \left( \sum_{i=0}^{n} M_i + \sum_{j=0}^{k} M_j \right)$.

In one or more embodiments, the automation device may comprise a programmable logic circuit, an embedded controller or a computer-based controller.

In one or more embodiments, the processor may be further configured to: determine, based upon a machine learning model and the buffer, a predicted fault of the automation device.

**DRAWINGS**

Preferred embodiments of the systems, methods and devices disclosed herein will now be described in detail with reference to the drawings, in which:

FIG. 1 shows an example automation system diagram at an industrial locale in accordance with one or more embodiments;

FIG. 2 shows an automation device diagram in accordance with one or more embodiments;

FIG. 3 shows an input/output diagram in accordance with one or more embodiments;

FIG. 4 shows an execution diagram for an automation device in accordance with one or more embodiments;

FIG. 5 shows an automation device buffer diagram in accordance with one or more embodiments;

FIG. 6 shows a method diagram in accordance with one or more embodiments;

FIG. 7 shows a method diagram in accordance with one or more embodiments;

FIG. 8 shows a system diagram in accordance with one or more embodiments; and

FIG. 9 shows a workstation device diagram in accordance with one or more embodiments.

**DESCRIPTION OF VARIOUS EMBODIMENTS**

It will be appreciated that numerous specific details are set forth in order to provide a thorough understanding of the example embodiments described herein. However, it will be understood by those of ordinary skill in the art that the embodiments described herein may be practiced without these specific details. In other instances, well-known methods, procedures and components have not been described in detail so as not to obscure the embodiments described herein. Furthermore, this description and the drawings are not to be considered as limiting the scope of the embodiments described herein in any way, but rather as merely describing the implementation of the various embodiments described herein.

It should be noted that terms of degree such as "substantially", "about" and "approximately" when used herein mean a reasonable amount of deviation of the modified term such that the end result is not significantly changed. These terms of degree should be construed as including a deviation of the modified term if this deviation would not negate the meaning of the term it modifies.

In addition, as used herein, the wording "and/or" is intended to represent an inclusive-or. That is, "X and/or Y" is intended to mean X or Y or both, for example. As a further example, "X, Y, and/or Z" is intended to mean X or Y or Z or any combination thereof.

One or more pieces of automation equipment may be used at an industrial locale, such as a factory, a refining facility, a mine, a smelter, etc. for industrial processing. One or more automation devices may control the operation of one or more pieces of the automation equipment. Several automation devices may control the operation of a single piece of automation equipment.

The automation device embodiments, including the systems, methods and devices described herein may be implemented, for example using programmable logic controllers (PLCs). These embodiments may be implemented in discrete logic circuits or using computer programs executing on a processor of an automation device of the automation equipment.

The automation equipment may be, for example, a machine on an assembly line, and an automation device may be programmed in order to perform automation tasks, such as the operation of the machine on the assembly line, etc. The automation equipment may include one or more automation devices such as programmable logic controllers (PLCs), which may be programmed in order to control the operation of the automation equipment. The automation devices may be real-time systems. The automation devices may have multiple inputs and multiple outputs. The automation devices may be designed to operate in hostile environments, including in extended temperature ranges, in areas with significant electrical or magnetic noise, and in areas with significant impacts or vibrations.

The automation device may include a program that is implemented using an international standard such as IEC 61131-3. The automation device may include a program that may be implemented in a graphical programming language such as Ladder Diagram (LD, LAD), Function Block Diagram (FBD) and Sequential Function Chart (SFC).

The automation device program may be implemented in a textual programming language such as Structured Text (ST; similar to Pascal) and Instruction List (IL). The automation device program may be implemented in programming languages such as specially adapted dialects of BASIC and C. However, the programs may also be implemented in assembly or machine language, if desired. In any case, the language may be a compiled or interpreted language. Each automation device program may be written using another device such as a workstation device, which can take the form of a desktop console, special software on a personal computer, or a handheld programming device. The automation device program may then be downloaded to the automation device directly or over a network. The automation device program may be stored either in non-volatile flash memory or battery-backed-up RAM. In some programmable controllers, the automation device program may be transferred from a workstation to the automation equipment through a programming board that writes the program into a removable chip, such as EPROM.

Some embodiments of the systems, methods and devices may include workstations that cooperate with the automation devices to aid in the analysis of automation equipment data for maintenance. These embodiments may be implemented in computer programs executing on programmable computers, each computer including at least one processor, a data storage system (including volatile memory or non-volatile memory or other data storage elements or a combination thereof), and at least one communication interface. For example, and without limitation, the programmable computers (referred to below as workstations) may be a server, network appliance, embedded device, computer expansion module, personal computer, laptop, personal data assistant, cellular telephone, smart-phone device, tablet computer, wireless device or any other computing device capable of being configured to carry out the methods described herein.

In some embodiments, a communication interface may enable the cooperation of the automation devices and the workstations. This communication interface may be a network communication interface. In still other embodiments, there may be a combination of communication interfaces implemented as hardware, software, and a combination thereof.

Program code may be applied to data at the workstation devices to perform functions described herein and to generate output information. The output information may be applied to one or more output devices, in known fashion.

Each program for the workstation devices may be implemented in a high-level procedural or object-oriented programming and/or scripting language, or both, to communicate with a computer system. However, the programs may be implemented in assembly or machine language, if desired. In any case, the language may be a compiled or interpreted language. Each such computer program may be stored on a storage media or a device (e.g., ROM, magnetic disk, optical disc) readable by a general or special purpose programmable computer, for configuring and operating the computer when the storage media or device is read by the computer to perform the procedures described herein. Embodiments of the system may also be considered to be implemented as a non-transitory computer-readable storage medium, configured with a computer program, where the storage medium so configured causes a computer to operate in a specific and predefined manner to perform the functions described herein.

The programs of the workstation devices, as described above may include programs for development of automation device programs. The programs for development of code for the automation device may be provided by the automation device manufacturer. In addition to being able to program the automation devices in multiple languages, the programs for development of code for the automation device provide common features like hardware diagnostics and maintenance, software debugging, and simulation.

The programs of the workstations may provide for automation device simulation. Automation device simulation may be found in the programs provided for development of automation device programs. It may allow for testing and debugging of programs for automation devices early in a project's development, as well as for debugging of automation devices *in situ,* i.e., the hardware and software devices may be connected to an automation device in a production environment such as an assembly line.

Furthermore, the systems, processes and methods of the described embodiments are capable of being distributed in a computer program product comprising a computer readable medium that bears computer usable instructions for one or more processors. The medium may be provided in various forms, including one or more diskettes, compact disks, tapes, chips, wireline transmissions, satellite transmissions, internet transmission or downloads, magnetic and electronic storage media, digital and analog signals, and the like. The computer useable instructions may also be in various forms, including compiled and non-compiled code.

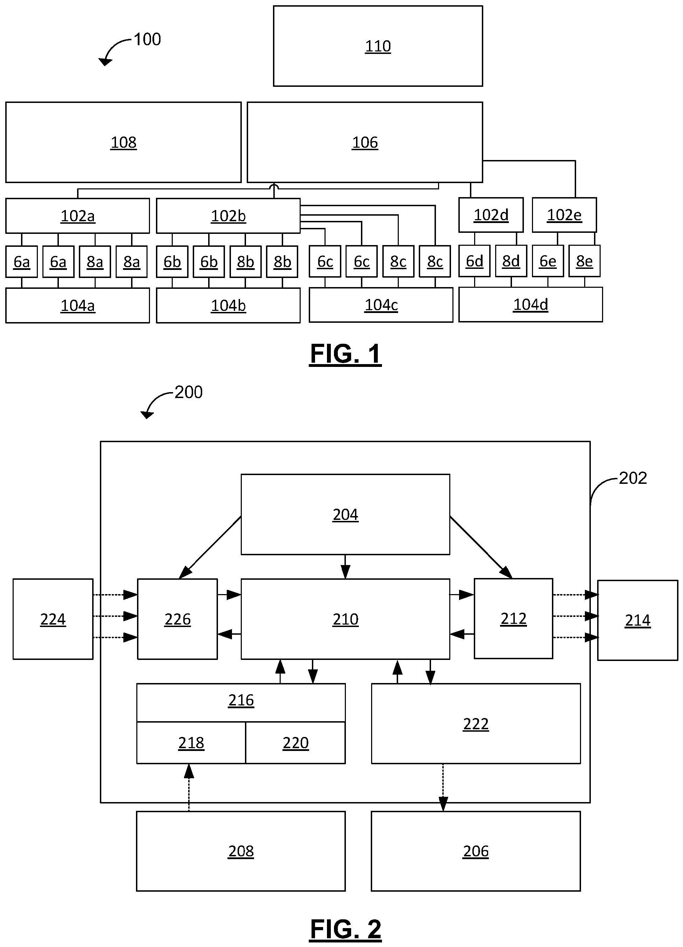

Referring first to FIG. 1, there is shown an example automation system 100 at an industrial locale in accordance with one or more embodiments. The automation system 100 includes one or more automation devices 102 (such as the automation device described above, and in FIG. 2) and one or more pieces of automation equipment 104. The automation devices 102 includes as automation device 102a, 102b, 102d, 102e. While four automation devices 102 are shown, it is understood that there may be as few as a single automation device 102, or many automation devices 102 (including hundreds or thousands of automation devices 102, for example on a large manufacturing line or assembly line). One or more automation devices 102 may control one or more pieces of automation equipment 104, for example, automation equipment 104a, 104b, 104c, 104d.

For clarity, a single automation device 102a may cooperate with, interact with, and/or control a single piece of automation equipment 104a. Alternatively, a single automation device 102b may cooperate with, interact with, and/or control multiple pieces of automation equipment 104b and 104c. Alternatively, two or more automation devices 102d, 102e may cooperate with, interact with, and/or control a single piece of automation equipment 104d.

The automation devices 102 interact with the automation equipment 104 using sensors 6 and actuators 8. For example, automation device 102a may interact with automation equipment 104a with sensors 6a and actuators 8a. For example, automation device 102b may interact with automation equipment 104b with sensors 6b and actuators 8b and may interact with automation equipment 104c with sensors 6c and actuators 8c. For example, automation device 102d may interact with automation equipment 104d with sensor 6d and actuator 8d, and automation device 102e may interact with sensor 6e and actuator 8e.

The automation devices 102 may interact with automation equipment 104 using many sensors 6, including one or two as shown in FIG.1, or more than two.

The sensors 6 may include digital and analog devices. The sensors 6 can include, for example, mechanical switches, proximity switches, photoelectric switches, encoders, temperature and pressure switches, potentiometers, linear variable differential transformers, strain gauges, thermistors, thermotransistors, thermocouples, acoustic sensors, optical sensors, level sensors, accelerometers, and other sensors as known.

The automation devices 102 may interact with automation equipment 104 using many actuators 8, including more than one or two as shown in FIG. 1.

The actuators 8 may include relays, directional control valves, motors, stepper motors, pistons, pumps, linear drive, and other actuators as known.

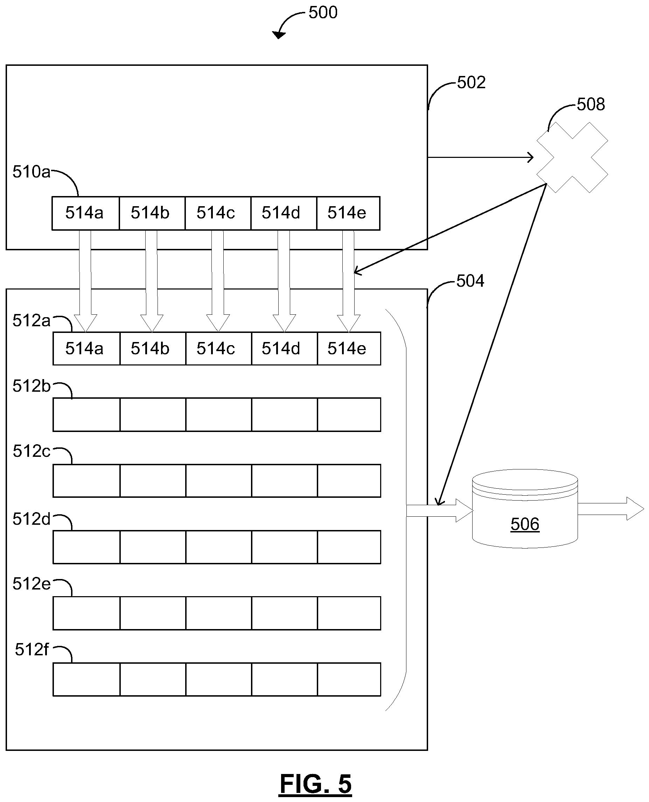

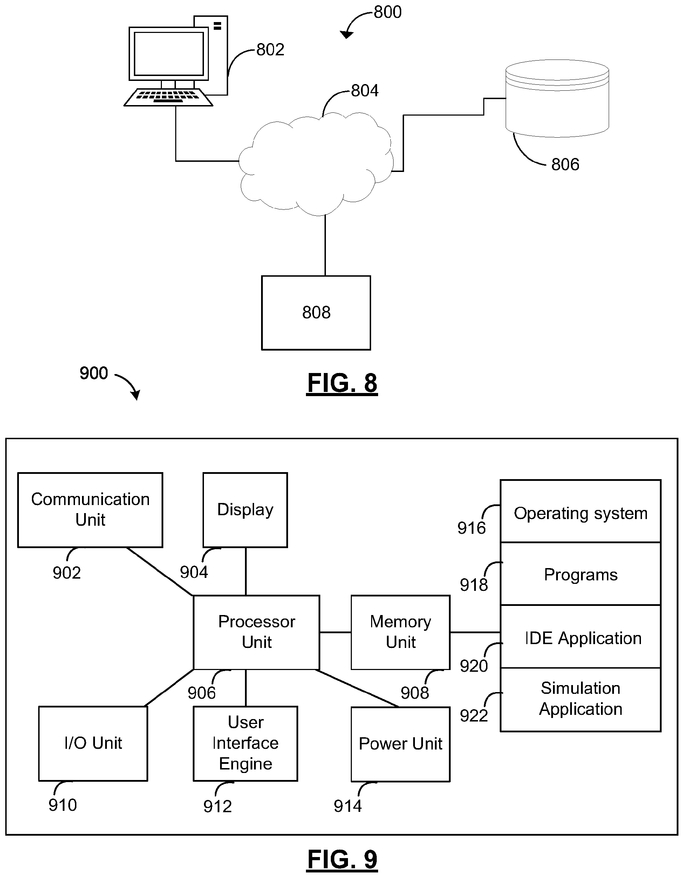

The one or more automation devices 102 may be in communication with storage device 106, for example, in network communication (as described in FIG. 8). One or more of the automation devices 102 may include a buffer, which may operate as described in FIGs. 5, 6 and 7. Some or all of the contents of the buffer of the one or more automation devices 102 may be transmitted to the storage device 106 and stored on a storage device therein. The contents of the buffer of the one or more automation devices 102 may be transmitted periodically, or alternatively, may be transmitted based on the occurrence of an event at the automation device 102 such as a fault event.

The storage device 106 may be a file storage device, such as a Network Attached Storage (NAS) device and may connect using a file transfer protocol such as Server Message Block (SMB) or another protocol as known.

The storage device 106 may alternatively be a database and may store historical buffer data from the one or more automation devices 102 and associated metadata. The database may be a Structured Query Language (SQL) database such as PostgreSQL or MySQL or a not only SQL (NoSQL) database such as MongoDB.

The storage device 106 may provide an Application Programming Interface (API) that the automation devices 102 may send data to. The storage device 106 may include a web server such as Apache®, Microsoft® IIS®, etc. The software application providing the API and the web application may be provided by Apache® Tomcat, Ruby on Rails, or another web application framework as known. The API may communicate with the automation devices in a variety of formats, such as JavaScript Object Notation (JSON) or eXtensible Markup Language (XML).

The storage device 106 may be a physical device or may be provided using a cloud-based provider such as Amazon® Web Services (AWS).

The one or more automation devices 102 may be in communication with supervisor device 108, for example, in network communication. The supervisor device 108 may control the processes of a substantial portion of the industrial locale, including controlling the operation of the one or more automation devices 102.

The supervisor device 108 may provide high-level operation information to a locale operator. The supervisor device 108 may enable a human to verify process variables, set speed of operation, configure setpoints of each of the one or more automation devices 102, etc.

The workstation device 110 is in communication (for example, network communication as described in FIG. 8) with the storage device 106, and optionally with the supervisor device 108.

The workstation device 110 may be in communication with the one or more automation devices 102. The workstation device 110 may provide a software application for writing, compiling, and simulating automation device programs. The workstation device 110 may send updated automation device programs to the one or more automation devices 102.

The workstation device 110 may receive automation device buffer data from the storage device 106 and may perform review and monitoring of the buffer data. The workstation device 110 may receive the automation device buffer data and perform a simulation of an automation device program based on the buffer data.

Referring next to FIG. 2, there is shown an automation device diagram 200 in accordance with one or more embodiments. The automation device 202 may be a PLC. The automation device 202 includes an input process image 226, a power supply 204, a processor 210, an output process output 212, a memory 216 including program memory 218 and data memory 220, and communication interface 222.

The power supply 204 provides power to the various components of the automation device 202.

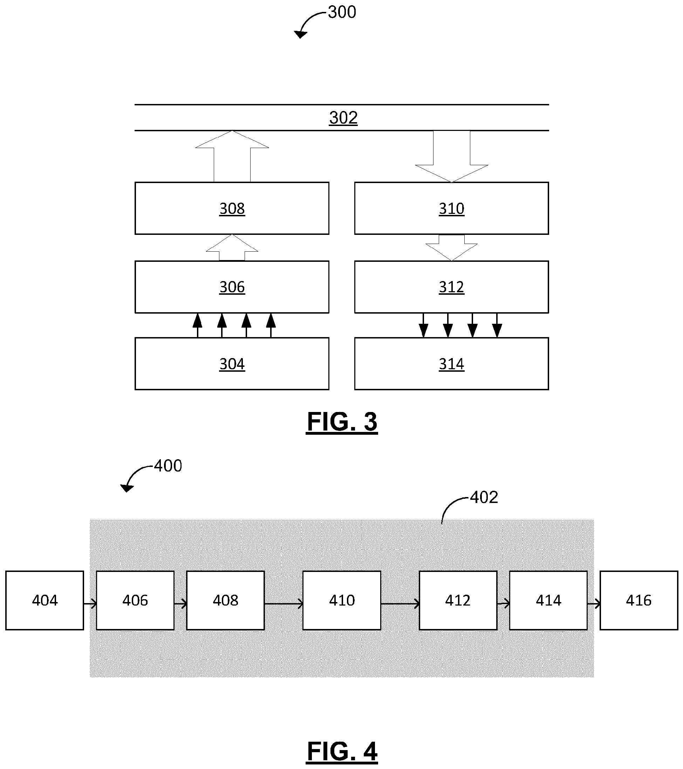

The input process image 226 and the output process image 212 may, respectively, interact with input devices 224 such as sensors, and output device 214 such as actuators, as described in further detail in FIG. 3.

The input process image 226 may include one or more input registers. The one or more input registers of input process image 226 may receive input data from input devices 224. The one or more input registers may store the input data by latching the inputs based on a clock signal (not shown) of the processor device. The input process image 226, as well as the output process image 212 in an automation device may be organized in bits, bytes, words, or double words. For example, example, the input process image 226 may include an IW (input word) consisting of an IB (input byte) and IB (input byte). Each input byte consists of a set of input bits. The size and definition of the input process image 226 and output process image 212 may be defined in the firmware of the automation device, such as designed by the manufacturer. The input process image 226 is readable by the processor 210 for processing of the inputs to determine an output for the output process image 212. The input process image 226 is readable by the processor 210 for storing the contents of the input process image 226 in a buffer such as a ring buffer (as described in further detail in, for example, FIGs. 5, 6, and 7).

The one or more input registers of input process image 226 may include one or more format types, including a real number type, an integer type, a byte type, a Boolean type, an object-oriented type, a hexadecimal type, a network transmission packet type, and an intermediate data format type. The data type may be an object-oriented data structure either used within the processor of the controller, an IO device or defined for data collecting and/or any other purpose. The data may be a hexadecimal format, a network transmission packet format or other intermediate data format depending on where the data is acquired.

The output process image 212 may include one or more output registers. The one or more output registers of the output process image 212 may receive data from the processor 210. The one or more output registers may store the output data by latching the outputs based on a clock signal (not shown) of the processor device. The output process image 212 is writeable by the processor 210 for storing outputs determined based on the inputs in input process image 226. The output process image 212 is readable by the processor 210 for storing the contents of the output process image 212 in a buffer such as a ring buffer (as described in further detail in, for example, FIGs. 5, 6, and 7).

The one or more input registers of output process image 212 may include one or more format types, including a real number type, an integer type, a byte type and a Boolean type. The data may be a hexadecimal format, a network transmission packet format or other intermediate data format depending on where the data is acquired.

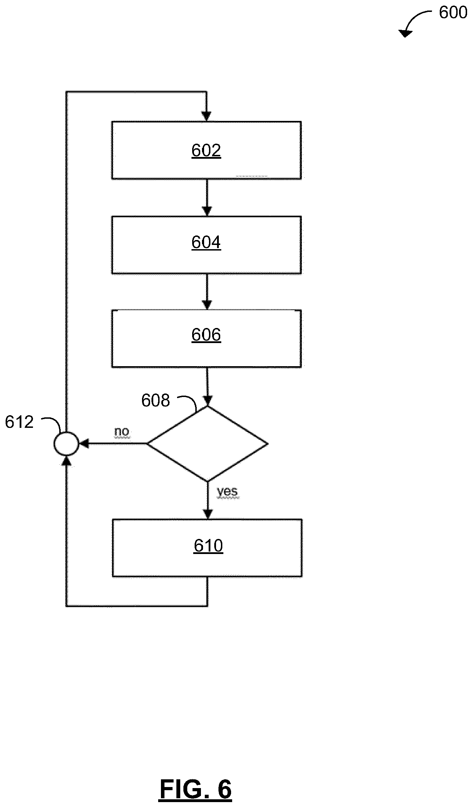

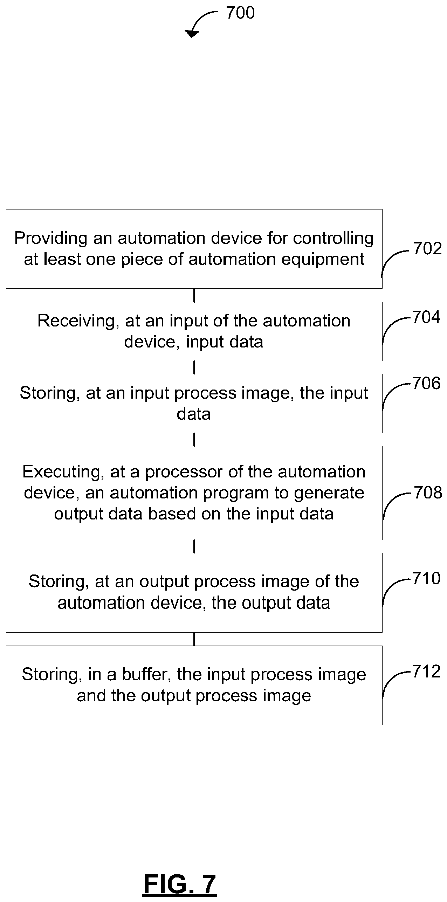

The processor 210 may be used to operate the automation device to provide control of automation equipment. The processor 210 may operate the methods of FIGs. 6 and 7. The processor 210 may have an internal memory, including for example, one or more registers.

The memory 216 stores programs 218 and data 220.

The programs 218 include automation device programs that can be read and executed by processor 210. The automation device programs in programs 218 include logical instructions for the automation device, including program code as described herein for processing inputs, generating outputs, etc., as required in order to operate the automation device 202. The data 220 of memory 216 may include a heap or a stack. The data 220 of memory 216 may store intermediate data of the automation device programs in programs 218. The data 220 of memory 216 may include a buffer such as a ring buffer. The buffer may be stored in memory 216, or alternatively, in a separate memory (not shown) of the automation device 202 with a connection comparable in speed to the cycle time of the automation device.

The data 220 of memory 216 may be sized to accommodate a buffer which stores N sets of input process image values and N sets of output process image values, where N = $T_{duration}$ / $T_{sample\ rate}$ * $N_{monitor\ tags}$. The memory may be sized in order to fit a buffer which has a size of at least N x M, where M $= N * \left( \sum_{i=0}^{n} M_i + \sum_{j=0}^{k} M_j \right)$. That is, the memory may be sized in order to accommodate N sets of input process image values and N sets of output process image values, where each input process image value includes a varying set of register types, and where each output process image value includes a varying set of register types.

Within an automation device, there may be data areas that can be described (in some cases, these may be referred to as data blocks). When a corresponding event occurs, the input bits or output bits of the process images may be transferred to the data block(s) by means of corresponding commands (i.e., there may be a block-wise transfer). The data blocks may be organized in the same way as the process images. A data double word consists of 2 data words, which consists of 4 data bytes which consists of 32 data bits. The data areas or data blocks of the automation device may also be stored in the buffer in data 220 of memory 216 in a similar manner to the output process image 212 and the input process image 226.

The buffer in data 220 of memory 216 can further store the contents of the internal memory of the processor 210. The contents of the internal memory of the processor 210 can include one or more controller memory tags.

At a fault event, or an error event of the automation device 202, the contents of the buffer in data 220 of memory 216 may be transmitted by the processor 210 to a storage device 206 using communication interface 222. This fault event may halt the storage of further input process image 226 data and output process image 212 data in the buffer until the automation device 202 continues normal operation.

A workstation device 208 may connect to the programs 218 of memory 216 to view, edit, or change the programs 218 which control the operation of the automation device 202. The workstation device 208 may connect directly to the automation device 202, for example via a serial cable, or a programming device, or alternatively the workstation device 208 may connect using a network connection via communication interface 222 in order to view, edit, or change the programs 218.

The communication interface 222 may connect to a communication network such as the Internet, a Wide-Area Network (WAN), a Local-Area Network (LAN), or another type of network. Communication interface 222 may connect using a point-to-point connection, or another communications connection between two nodes.

The communication interface 222 operates to send and receive data using a network connection. This can include wired or wireless connection capabilities. The communication interface 222 enables communication between the automation device 202 and a storage device 206, and optionally a workstation 208.

Storage device 206 may receive and store the contents of the buffer in data 220 of memory 216 via communication interface 206.

FIG. 3 shows an input/output diagram 300 in accordance with one or more embodiments. An automation device may have a processor bus 302. Inputs, for example, from one or more sensors 304 are received at processor inputs 306. The processor input 306 may include, for example, an opto-isolator. The processor input 306 receives the sensor data, and then the data is stored in an input register 308. The input register 308 may buffer the input data received at the processor input 306 as it is received. The input register 308 may latch input data based on a clock signal of the processor. The clock signal may form a portion of the processor bus 302. The processor may then execute its automation device program including using the input data in the input register 308. The processor may then make output data available on the processor bus 302 and may buffer or latch the output data into an output register 310. The output register 310 may be latched based on a clock signal of the processor bus 302. A driver interface 312 may provide output to one or more actuators 314, for example, electrical output to a relay.

FIG. 4 shows an execution diagram 400 for an automation device 402 in accordance with one or more embodiments. An automation device program may be loaded into the memory of an automation device 402 and may configure and control the processor 410.

The automation device 402 may have one or more input devices 404 such as sensors connected to the processor input 406 (see e.g., 306 in FIG. 3). The one or more input devices 404 may include digital or analog input devices. The processor input 406 may include, for example, one or more opto-isolators. The input data received from the input devices 404 may be digitized, sampled, or stored into an input process image 408 via processor input 406. The input process image 408 may be stored in the buffer (see e.g., FIGs. 5, 6, and 7).

The execution and the processing of the automation device program on the processor 410 may include executing the device program based on the data in the input process image 408 and providing output to the output process image 412. The processor 410 may include an internal memory including for example, one or more registers. The internal memory of the processor 410 may be stored in the buffer. The contents of the internal memory of the processor 410 can include one or more controller memory tags.

The output process image 412 provides the output data to the processor output 414 (see e.g., 312 in FIG. 3), which may include drivers or other devices for preparing the output signals from the automation device 402. The output process image 412 may be stored in the buffer (see e.g., FIG. 5, 6, and 7).

One or more output devices 416, including one or more actuators, receive the output signals from the processor output 414, and responsive to the output signals may actuate, change position, etc. as known.

FIG. 5 shows an automation device buffer diagram 500 in accordance with one or more embodiments. The automation device 502 may be as described in FIGs. 1 - 4 herein. The automation device 502 has one or more registers 514, for example, registers 514a, 514b, 514c, 514d and 514e. The registers 514 may be a combination of input registers from the input process image and output registers from the output process image. The registers 514 may be the same size, or alternatively may be different sizes. The registers 514 may include different types of registers, for example, a real number type, an integer type, a byte type, a Boolean type, an object-oriented type, a hexadecimal type, a network transmission packet type, and an intermediate data format type. The registers 514 may further include one or more registers of the internal memory of the processor of the automation device 502. The registers 514 can include one or more controller memory tags from the internal memory of the processor of the automation device 502.

The automation device 502 may process input data and generate output data as described herein using an automation device program.

The automation device 502 may include a clock signal. For example, the clock signal may be generally a square wave with a frequency of 5 Mhz, 50 Mhz, 500 Mhz or higher.

A set 510 of registers 514 is provided at automation device 502. For example, the automation device 502 includes a register set 510a of registers 514a, 514b, 514c, 514d, and 514e including input registers from an input process image and output registers from an output process image.

The buffer 504 may be in a memory of the automation device 502, or alternatively, may be in a separate memory.

The buffer 504 includes a plurality of register sets 512, including for example 512a, 512b, 512c, 512d, 512e, and 512f. The number of register sets 512 in the buffer 504 may be configurable. The number of register sets 512 in the buffer 504 may be represented as N sets of input process image values and N sets of output process image values, where:

$$N = T_{duration} / T_{sample\ rate} * N_{monitor\ tags} \quad \text{Equation (1)}$$

In Equation (1), the minimum cycle time is $T_{sample\ rate}$ for storage of input process and output process images. The number of monitored signals $N_{monitor\ tags}$ describes how many individual channels or signals are stored in the buffer. The maximum monitoring period $T_{duration}$ describes the recording length of the buffer 504.

The buffer 504 may be a ring buffer. For example, the buffer 504 may be a circular buffer, circular queue, cyclic buffer or ring buffer representing a data structure that uses a single, fixed-size buffer. The buffer 504 may follow a first-in, first-out scheme where buffer entries are replaced as new buffer entries 512 are added. Each buffer entry 512 in the ring buffer may be sized to fit each set 510 of input process and output process image values (including the registers 514). While six buffer entries 512 are shown, it is understood that there may be fewer buffer entries 512 than 6, or alternatively, there may be more buffer entries 512 (for examples, tens of entries or hundreds of entries). Suitable programming of the ring buffer 504 ensures that the states of the signals to be monitored are saved in the buffer 504 for each clock cycle of the automation device 502.

On a rising clock signal of the automation device 502, the set 510a of registers 514 may be stored in a buffer entry 512a in buffer 504.

In an alternate embodiment, another signal such as an event signal may be used to transfer the set 510a of registers 514 to a buffer entry 512a in buffer 504.

As buffer entries 512 are added, a write pointer may be updated in the buffer 504. For example, when the set 510a is stored in buffer entry 512a, the write pointer may be updated to buffer entry 512b, so that the next set 510 of registers 514 that is added is stored in buffer entry 512b. Once the buffer 504 fills, then the write pointer may "wrap around" from buffer entry 512f to buffer entry 512a, such that the oldest buffer entry is replaced as the newest buffer entry is added.

The memory requirement of the buffer 504 may be configured based on the different data types in the input process and output process image. That is, if the input process image includes different types of input registers, and the output process image includes different types of output registers, then the memory size of the buffer 504 may change. The determination of the memory requirement for the buffer having N buffer entries and Mi individual input register requirements and $M_j$ individual output register requirements (based on the different types of registers) may follow Equation (2):

$$N * \left( \sum_{i=0}^{n} M_i + \sum_{j=0}^{k} M_j \right) \quad \text{Equation (2)}$$

The filling of the buffer 504 may start with a new start or restart of the automation device 502 in time interval $T_{min}$. The filling of the buffer 502 may stop at the occurrence of a defined fault event 508, which may be detected by the automation device 502. The occurrence of the fault event 508 may be signaled to the buffer 504 based on a signal (e.g., edge change at a signal). Once the fault event 508 is received, the filling of the buffer 504 with buffer entries 512 is halted. Further, once the fault event 508 is received, the contents of the buffer 504 (including the plurality of buffer entries 512) may be transmitted to a storage device 506. This may include transmitting the buffer entries 512 over a network to the storage device 506. This may further include transmitting other automation device 502 data, such as metadata or other data to the storage device 506.

The content of the buffer 504 is stored in the storage device 506 and made available for an operator to conduct detailed diagnostics.

The buffer 504 functions, therefore, to provide a historical set of data of the automation device 502 recorded prior to the occurrence of the fault event 508.

FIG. 6 shows a method diagram 600 in accordance with one or more embodiments. FIG. 6 may operate on the processor of an automation device.

At 602, the signal states $N_{monitor}$, including those in the input process image and the output process image are read.

At 604, the signal states $N_{monitor}$, including those in the input process image and the output process image are stored in the buffer.

At 606, the write pointer of the buffer is advanced by one buffer entry.

At 608, a check is done to see if a fault event or an error event has been received.

At 610, if a fault event or an error event has been received, store the buffer in a storage device.

At 612, if a fault event or an error event has not been received, the data collection cycle continues back at 602.

The automation device states, in the form of one or more registers from the input process image and the output process image, may thus be collected and stored in a buffer during the normal operation of the automation device. At the time of a fault event or an error event, the contents of the buffer may include input and output data from the input process image and the output process image respectively. The data collection of the input process image and the output process image generally in parallel with the normal operation of the automation device thus may provide helpful information for an operator who can access the storage device using a workstation.

The cycle of 602, 604, 606, 608, 612 may be performed with cycle time $t=T_{min}$.

FIG. 7 shows a method diagram 700 in accordance with one or more embodiments.

At 702, an automation device for controlling at least one piece of automation equipment is provided. The automation device may be a programmable logic controller (PLC). The automation device may be provided on a rack proximate to one or more pieces of automation equipment.

At 704, input data is received at an input of the automation device.

At 706, the input data is stored at an input process image.

At 708, an automation program is executed at a processor of the automation device to generate output data based on the input data.

At 710, the output data is stored at an output process image of the automation device.

At 712, the input process image and the output process image are stored in a buffer.

Optionally, the method may further include: receiving, at the automation device, a fault event signal; and storing, at a storage device in communication with the automation device, the buffer.

Optionally, the fault event signal may be generated by the automation device.

Optionally, the fault event signal may be generated externally from the automation device.

Optionally, the storage device may be in network communication with the automation device.

Optionally, the storing, in the buffer, the input process image and the output process image may be initiated based on a clock signal of the automation device. Optionally, the storing may occur on the rising edge of the clock signal.

Optionally, the input process image may include at least one input register, and the output process image may include at least one output register.

Optionally, the buffer may be a ring buffer.

Optionally, the buffer may replace buffer entries using a First-In, First-Out scheme.

Optionally, the ring buffer stores N sets of input process image values and N sets of output process image values, where $N = T_{duration} / T_{sample\ rate} * N_{monitor\ tags}$.

Optionally, the at least one input register may include at least one format type i selected from the group of a real number type, an integer type, a byte type, a Boolean type and an object oriented type, a hexadecimal type, a network transmission packet type, and an intermediate data format type; the at least one output register may include at least one format type j selected from the group of the real number type, the integer type, the byte type and the Boolean type, the object oriented type, the hexadecimal type, the network transmission packet type, and the intermediate data format type; and the buffer has a size of at least N, where the memory requirement $M = N * \left( \sum_{i=0}^{n} M_i + \sum_{j=0}^{k} M_j \right)$.

Optionally, the automation device may be a programmable logic circuit, an embedded controller or a computer-based controller.

Optionally, the method may further include: determining, based upon a machine learning model and the buffer stored at the storage device, a predicted fault of the automation device.

FIG. 8 shows a system diagram 800 in accordance with one or more embodiments.

The system 800 includes an operator workstation 802, a network 804, a data storage device 806, and an industrial locale 808 with one or more automation devices such as described in FIGs. 1 - 7.

The operator workstation 802 may be in network communication with any of the storage device 806 and the industrial locale 808.

The operator workstation 802 may be used by a user such as an operator or a software developer to access the stored buffer data 806 via network 804. The operator workstation 802 may include a software application (not shown) which may function as an Integrated Development Environment (IDE) that the operator may use to analyze the buffer data once downloaded. The IDE may be provided by the manufacturer of a particular automation device, or it may be a 3rd party application. The workstation 802 may further include an automation device simulator that may be able to simulate the operation of a particular automation device program based on the buffer data received.

In one embodiment, the operator workstation 802 may transmit an automation device program to one or more automation devices at industrial locale 808. This may be done using the network 804 or another means as known, including by using a programming board connected using a serial connection to the workstation 802 into which the automation device is placed.

The operator workstation 802 may be a desktop computer, mobile device, or laptop computer. An operator workstation 802 may be a mobile device such as mobile devices running the Google® Android® operating system or Apple® iOS® operating system and the software applications may be downloaded from an App Store such as the Apple® App Store or the Google® Play Store. An operator workstation 802 may be a desktop computer or a laptop such as a Microsoft® Windows® capable device or a MacOS® capable device.

The software applications running on the operator workstation 802 may communicate with storage device 806 using an Application Programming Interface (API) and may send and receive data to the storage device using the API. The software applications running on the operator workstation 802 may communicate with the automation devices at locale 808 using an Application Programming Interface (API) of the automation devices and may send and receive data to them using the API.

The network 804 may be any network or network components capable of carrying data including the Internet, Ethernet, fiber optics, satellite, mobile, wireless (e.g. Wi-Fi, WiMAX), SS7 signaling network, fixed line, local area network (LAN), wide area network (WAN), a direct point-to-point connection, mobile data networks (e.g., Universal Mobile Telecommunications System (UMTS), 3GPP Long-Term Evolution Advanced (LTE Advanced), Worldwide Interoperability for Microwave Access (WiMAX), etc.) and others, including any combination of these.

The data storage device 806 may be a file storage device. For example, the data storage device may be a redundant storage device such as a Network Attached Storage (NAS) or may be a service such as Amazon® S3, or Dropbox.

The data storage device 806 may be a database. The database of data storage device 806 may be a Structured Query Language (SQL) such as PostgreSQL or MySQL or a not only SQL (NoSQL) database such as MongoDB.

The data storage device 806 may be a server hosting an application capable of providing an API for interaction with the automation devices at locale 808 and the operator workstation 802. The requests made to the API endpoint of data storage device 806 may be made in a variety of different formats, such as JavaScript Object Notation (JSON) or eXtensible Markup Language (XML).

The industrial locale 808 may be a factory, a refining facility, a mine, a smelter, etc. for industrial processing. The industrial locale 808 may be other facilities using automation devices as known.

The automation devices at the industrial locale 808 may transfer buffer data to the storage device 806 via network 804 as described herein. The operator at operator workstation 802 may download or access the stored buffer data on the storage device 806 in order to create new automation device programs, diagnose problems with the automation devices at industrial locale 808, including modifying the automation device programs at the automation devices at industrial locale 808.

FIG. 9 shows a workstation device diagram 900 in accordance with one or more embodiments. The workstation device may be one such as workstation 110 in FIG. 1 or workstation 802 in FIG. 8. The workstation device includes one or more of a communication unit 902, a display 904, a processor unit 906, a memory unit 908, I/O unit 910, a user interface engine 912, and a power unit 914.

The communication unit 902 can include wired or wireless connection capabilities. The communication unit 902 can include a radio that communicates using standards such as IEEE 802.11a, 802.11b, 802.11g, or 802.11n. The communication unit 902 can be used by the workstation device to communicate with other devices or computers.

Communication unit 902 may communicate with a network, such as network 804 (see FIG. 8).

The display 904 may be an LED or LCD based display and may be a touch sensitive user input device that supports gestures.

The processor unit 906 controls the operation of the workstation device. The processor unit 906 can be any suitable processor, controller or digital signal processor that can provide sufficient processing power depending on the configuration, purposes and requirements of the workstation as is known by those skilled in the art. For example, the processor unit 906 may be a high-performance general processor. In alternative embodiments, the processor unit 906 can include more than one processor with each processor being configured to perform different dedicated tasks. The processor unit 906 may include a standard processor, such as an Intel® processor or an AMD® processor.

The processor unit 906 can also execute a user interface (UI) engine 912 that is used to generate various IIls for the programs 918, the IDE Application 920 and the simulation application 922.

The memory unit 908 comprises software code for implementing an operating system 916, programs 918, IDE application 920, and simulation application 922.

The memory unit 908 can include RAM, ROM, one or more hard drives, one or more flash drives or some other suitable data storage elements such as disk drives, etc.

The I/O unit 910 can include at least one of a mouse, a keyboard, a touch screen, a thumbwheel, a trackpad, a trackball, a card-reader, an audio source, a microphone, voice recognition software and the like again depending on the particular implementation of the workstation. In some cases, some of these components can be integrated with one another.

The user interface engine 912 is configured to generate interfaces for users to write automation device programs, analyze and troubleshoot automation devices based on buffer data, and simulate the operation of an automation device, etc.

The power unit 914 can be any suitable power source that provides power to the workstation such as a power adaptor or a rechargeable battery pack depending on the implementation of the workstation as is known by those skilled in the art.

The operating system 916 may provide various basic operational processes for the workstation. For example, the operating system 916 may be an operating system such as Ubuntu® Linux, Microsoft® Windows® operating system, or another operating system.

The programs 918 include various user programs. They may include applications for working with automation devices and for creating and modifying automation device programs, and other applications as known.

The IDE application 920 may be an Integrated Development Environment for automation device program creation and modification. The IDE application 920 may be compliant with International Electrotechnical Commission standard 61131-3 (IEC-61131-3).

The simulation application 922 may be used to simulate the operation of an automation device program created with IDE application 920 using the data from the buffer of an automation device operating in the locale 808. The simulation application 922 may be used in order to step through the operation of an automation device in order to review and analyze the root cause of the fault code.

The simulation application 922 may function using a machine learning model to predict a root cause of the fault code.

Various embodiments have been described herein by way of example only. Various modifications and variations may be made to these example embodiments without departing from the spirit and scope of the invention, which is limited only by the appended claims. Also, in the various user interfaces illustrated in the figures, it will be understood that the illustrated user interface text and controls are provided as examples only and are not meant to be limiting. Other suitable user interface elements may be possible.

Further understanding may be gained through contemplation of the numbered embodiments below.

1. An automation device method, the method comprising:

- providing an automation device for controlling at least one piece of automation equipment;
- receiving, at an input of the automation device, input data;
- storing, at an input process image, the input data;
- executing, at a processor of the automation device, an automation program to generate output data based on the input data;
- storing, at an output process image of the automation device, the output data; and
- storing, in a buffer, the input process image and the output process image.

2. The method of embodiment 1, further comprising:

- storing, in the buffer, an internal memory of the processor of the automation device.

3. The method of embodiments 1 or 2, further comprising:

- receiving, at the automation device, a fault event signal; and
- storing, at a storage device in communication with the automation device, the buffer.

4. The method of any one of embodiments 1 to 3, wherein the storage device is in network communication with the automation device.

5. The method of any one of embodiments 1 to 4, wherein the storing, in the buffer, the input process image and the output process image is initiated based on a clock signal of the automation device.

6. The method of any one of embodiments 1 to 5, wherein the input process image comprises at least one input register, and the output process image comprises at least one output register.

7. The method of any one of embodiments 3 to 6, wherein the buffer comprises a ring buffer.

8. The method of embodiment 7, wherein the ring buffer stores N sets of input process image values and N sets of output process image values, where

$$N = T_{duration} / T_{sample\ rate} * N_{monitor\ tags}.$$

9. The method of embodiment 8, wherein:

- the at least one input register comprises at least one format type i selected from the group of a real number type, an integer type, a byte type, a Boolean type, an object oriented type, a hexadecimal type, a network transmission packet type, and an intermediate data format type;
- the at least one output register comprises at least one format type j selected from the group of the real number type, the integer type, the byte type, the Boolean type, the object oriented type, the hexadecimal type, the network transmission packet type, and the intermediate data format type; and

- the buffer has a size of at least N, where the memory requirement M = $N * \left( \sum_{i=0}^{n} M_i + \sum_{j=0}^{k} M_j \right)$.

10. The method of any one of embodiments 1 to 9, wherein the automation device comprises a programmable logic circuit, an embedded controller or a computer-based controller.

11. The method of any one of embodiments 1 to 10, further comprising:

- determining, based upon a machine learning model and the buffer stored at the storage device, a predicted fault of the automation device.

12. An automation device system, the system comprising:

an automation device comprising:

a memory comprising a buffer;
an input process image comprising input data;
an output process image comprising output data;
a processor configured to:

execute an automation program to generate the output data based on the input data; and
store the input process image and the output process image in the buffer; and

a network device;

a storage device in communication with the network device of the automation device, the storage device configured to:

receive the buffer from the automation device; and
store the buffer.

13. The system of embodiment 12, wherein the processor of the automation device further comprises an internal memory, the processor further configured to:

- store, in the buffer, the internal memory of the processor of the automation device.

14. The system of any one of embodiments 12 or 13, wherein the processor is further configured to:

receive a fault event signal; and
transmit the buffer to the storage device using the network device.

15. The system of any one of embodiments 12 to 14, wherein the processor is further configured to store, in the buffer, the input process image and the output process image, and the storing is initiated based on a clock signal of the automation device.

16. The system of any one of embodiments 12 to 15, wherein the input process image comprises at least one input register, and the output process image comprises at least one output register.

17. The system of any one of embodiments 12 to 16, wherein the buffer comprises a ring buffer.

18. The system of embodiment 17, wherein the ring buffer stores N sets of input process image values and N sets of output process image values, where $N = T_{duration} / T_{sample\ rate} * N_{monitor\ tags}$.

19. The system of embodiment 18, wherein:

- the at least one input register comprises at least one format type i selected from the group of a real number type, an integer type, a byte type and a Boolean type;
- the at least one output register comprises at least one format type j selected from the group of the real number type, the integer type, the byte type and the Boolean type; and

- the buffer has a size of at least N x M, where $M = N * \left( \sum_{i=0}^{n} M_i + \sum_{j=0}^{k} M_j \right)$.

20. The system of any one of embodiments 12 to 19, wherein the automation device comprises a programmable logic circuit, an embedded controller or a computer-based controller.

21. The system of any one of embodiments 12 to 20, wherein the processor is configured to:

- determine, based upon a machine learning model and the buffer, a predicted fault of the automation device.

22. An automation device, comprising:

a memory comprising a buffer;
an input process image comprising input data;
an output process image comprising output data; and
a processor configured to:

execute an automation program to generate the output data based on the input data;
store the input process image and the output process image in the buffer; and

a network device for transmitting the buffer to a storage device.

23. The device of embodiment 22, wherein the processor further comprises an internal memory, the processor further configured to:

- store, in the buffer, the internal memory of the processor of the automation device.

24. The automation device of any one of embodiments 22 to 23, wherein the processor is further configured to:

receive a fault event signal; and
transmit the buffer to the storage device using the network device.

25. The automation device of any one of embodiments 22 to 24, further comprising:

a clock signal generator; and
wherein the processor is further configured to store, in the buffer, the input process image and the output process image, and the storing is initiated based on the clock signal.

26. The automation device of any one of embodiments 22 to 25, wherein the input process image comprises at least one input register, and the output process image comprises at least one output register.

27. The automation device of any one of embodiments 22 to 26, wherein the buffer comprises a ring buffer.

28. The automation device of embodiment 27, wherein the ring buffer stores N sets of input process image values and N sets of output process image values, where N $=T_{duration}$ / $T_{sample\ rate}$ * $N_{monitor\ tags}$.

29. The automation device of embodiment 28, wherein:

- the at least one input register comprises at least one format type i selected from the group of a real number type, an integer type, a byte type and a Boolean type;
- the at least one output register comprises at least one format type j selected from the group of the real number type, the integer type, the byte type and the Boolean type; and
- the buffer has a size of at least N x M, where M = $N * \left( \sum_{i=0}^{n} M_i + \sum_{j=0}^{k} M_j \right)$.

30. The automation device of any one of embodiments 22 to 29, wherein the automation device comprises a programmable logic circuit, an embedded controller or a computer-based controller.

31. The automation device of any one of embodiments 22 to 30, wherein the processor is further configured to:

- determine, based upon a machine learning model and the buffer, a predicted fault of the automation device.

**Claims**

1. An automation device method, the method comprising:

   - receiving, at an input of the automation device, input data;
   - storing, at an input process image, the input data;
   - executing, at a processor of the automation device, an automation program to generate output data based on the input data;
   - storing, at an output process image of the automation device, the output data; and
   - storing, in a buffer, the input process image and the output process image.

2. The method of claim 1, further comprising:

   - storing, in the buffer, an internal memory of the processor of the automation device.

3. The method of claim 1 or 2, further comprising:

   - receiving, at the automation device, a fault event signal; and
   - storing, at a storage device in communication with the automation device, the buffer.

4. The method of any one of claims 1 to 3, wherein the storage device is in network communication with the automation device.

5. The method of any one of claims 1 to 4, wherein the storing, in the buffer, the input process image and the output process image is initiated based on a clock signal of the automation device.

6. The method of any one of claims 1 to 5, wherein the input process image comprises at least one input register, and the output process image comprises at least one output register.

7. The method of any one of claims 3 to 6, wherein the buffer comprises a ring buffer.

8. The method of claim 7, wherein the ring buffer stores N sets of input process image values and N sets of output process image values, where N = $T_{duration}$ / $T_{sample\ rate}$ * $N_{monitor\ tags}$.

9. The method of claim 8, wherein:

- the at least one input register comprises at least one format type i selected from the group of a real number type, an integer type, a byte type, a Boolean type, an object oriented type, a hexadecimal type, a network transmission packet type, and an intermediate data format type;
- the at least one output register comprises at least one format type j selected from the group of the real number type, the integer type, the byte type, the Boolean type, the object oriented type, the hexadecimal type, the network transmission packet type, and the intermediate data format type; and

- the buffer has a size of at least N, where the memory requirement M = $N * \left( \sum_{i=0}^{n} M_i + \sum_{j=0}^{k} M_j \right)$.

10. The method of any one of claims 1 to 9, wherein the automation device comprises a programmable logic circuit, an embedded controller or a computer-based controller.

11. The method of any one of claims 1 to 10, further comprising:

   - determining, based upon a machine learning model and the buffer stored at the storage device, a predicted fault of the automation device.

12. An automation device system, the system comprising:

   an automation device comprising:

      a memory comprising a buffer;
      an input process image comprising input data;
      an output process image comprising output data;
      a processor configured to:

         execute an automation program to generate the output data based on the input data; and
         store the input process image and the output process image in the buffer; and

      a network device;

   a storage device in communication with the network device of the automation device, the storage device configured to:

      receive the buffer from the automation device; and
      store the buffer.

13. The system of claim 12, wherein the processor of the automation device further comprises an internal memory, the processor further configured to:

   - store, in the buffer, the internal memory of the processor of the automation device.

14. The system of any one of claims 12 or 13, wherein the processor is further configured to:

   receive a fault event signal; and
   transmit the buffer to the storage device using the network device.

15. An automation device, comprising:

   a memory comprising a buffer;
   an input process image comprising input data;
   an output process image comprising output data; and
   a processor configured to carry out the method of any of claims 1 to 11.

**FIG. 1**

**FIG. 2**

300

| 302 |
|:---:|

| 308 | | 310 |
|:---:|:---:|:---:|

| 306 | | 312 |
|:---:|:---:|:---:|

| 304 | | 314 |
|:---:|:---:|:---:|

**FIG. 3**

400

402

| 404 | 406 | 408 | 410 | 412 | 414 | 416 |
|:---:|:---:|:---:|:---:|:---:|:---:|:---:|

**FIG. 4**

**FIG. 5**

600

**FIG. 6**

700

Providing an automation device for controlling at least one piece of automation equipment — 702

Receiving, at an input of the automation device, input data — 704

Storing, at an input process image, the input data — 706

Executing, at a processor of the automation device, an automation program to generate output data based on the input data — 708

Storing, at an output process image of the automation device, the output data — 710

Storing, in a buffer, the input process image and the output process image — 712

## FIG. 7

**FIG. 8**

**FIG. 9**

## EUROPEAN SEARCH REPORT

**Application Number**

EP 23 20 8963

### DOCUMENTS CONSIDERED TO BE RELEVANT

| Category | Citation of document with indication, where appropriate, of relevant passages | Relevant to claim |
|---|---|---|
| X | DE 10 2009 024101 A1 (BOSCH GMBH ROBERT [DE]) 21 October 2010 (2010-10-21) | 1-8, 10-15 |
| A | * paragraphs [0011], [0015], [0016] * | 9 |
| X | JP 2000 235412 A (OMRON TATEISI ELECTRONICS CO) 29 August 2000 (2000-08-29) | 1-8, 10-15 |
| A | * paragraphs [0001], [0024], [0053] * | 9 |
| X | US 2011/077906 A1 (UENO SHINTARO [JP] ET AL) 31 March 2011 (2011-03-31) | 1-8, 10-15 |
| A | * claim 1 * | 9 |

**CLASSIFICATION OF THE APPLICATION (IPC)**

INV.
G05B19/042

**TECHNICAL FIELDS SEARCHED (IPC)**

G05B

The present search report has been drawn up for all claims

| Place of search | Date of completion of the search | Examiner |
|---|---|---|
| Munich | 4 April 2024 | Messelken, M |

EPO FORM 1503 03.82 (P04C01)

## ANNEX TO THE EUROPEAN SEARCH REPORT
## ON EUROPEAN PATENT APPLICATION NO.

EP 23 20 8963

This annex lists the patent family members relating to the patent documents cited in the above-mentioned European search report.
The members are as contained in the European Patent Office EDP file on
The European Patent Office is in no way liable for these particulars which are merely given for the purpose of information.

04-04-2024

| Patent document cited in search report | Publication date | Patent family member(s) | | Publication date |
|---|---|---|---|---|
| DE 102009024101 A1 | 21-10-2010 | CN | 102395930 A | 28-03-2012 |
| | | DE | 102009024101 A1 | 21-10-2010 |
| | | EP | 2419799 A1 | 22-02-2012 |
| | | WO | 2010118863 A1 | 21-10-2010 |
| JP 2000235412 A | 29-08-2000 | NONE | | |
| US 2011077906 A1 | 31-03-2011 | EP | 1703348 A2 | 20-09-2006 |
| | | EP | 2228698 A1 | 15-09-2010 |
| | | US | 2006253626 A1 | 09-11-2006 |
| | | US | 2011077906 A1 | 31-03-2011 |

EPO FORM P0459

For more details about this annex : see Official Journal of the European Patent Office, No. 12/82